# EUROPÄISCHE PATENTANMELDUNG

(11) **EP 3 031 538 A1**
(43) Veröffentlichungstag der Anmeldung: **15.06.2016**
(21) Anmeldenummer: 15003393.4
(22) Anmeldetag: 28.11.2015
(51) Int. Cl.: B08B 1/00, A47L 1/02, B64C 39/02, F24J 2/46

(54) **VERFAHREN ZUM STEUERN EINES UNBEMANNTEN DREHFLÜGELFLUGGERÄTS ZUR REINIGUNG WEITGEHEND GLATTER FLÄCHEN**

(30) Priorität: 02.12.2014 DE 102014017768
(71) Anmelder: Fritzsche, Marcus, 07580 Braunichswaide (DE)
(72) Erfinder: Fritzsche, Marcus, 07580 Braunichswaide (DE)

(57) **Zusammenfassung**

Verfahren zum Steuern eines unbemannten Drehflügelfluggeräts (8) zur Reinigung weitgehend glatter Flächen, wobei das Drehflügelfluggerät mit mindestens einem elektronischen Steuergerät (3), einer Vorrichtung zur Lokalisierung von weitgehend glatten Flächen (4), mindestens einem Energiespeicher sowie mindestens einer Reinigungsvorrichtung ausgestattet ist, und mindestens folgende Verfahrensschritte ausgeführt werden:
- Fortbewegung des Drehflügelfluggeräts zu Ort in Nähe der weitgehend glatten Fläche; und
- Erfassen der weitgehend glatten Fläche durch die Vorrichtung zur Lokalisierung; und
- Anflug und Andocken mit der Reinigungsvorrichtung, auf die erfasste weitgehend glatte Fläche; und
- Reinigen der weitgehend glatten Fläche mit der Reinigungsvorrichtung, indem mit dem elektronischen Steuergerät (3) das Drehflügelfluggerät so angesteuert wird, dass ein Anpressdruck und eine Fortbewegung in einer parallelen Richtung auf der erfassten weitgehend glatten Fläche ausgeführt werden.

## Beschreibung

### Stand der Technik mit Fundstellen:

Die Reinigung von weitgehend glatten Flächen beinhaltet insbesondere die Reinigung von Glasflächen an der Außenhaut von Gebäuden, wie zum Beispiel Fassaden und Dächer, die einen Großteil des Anwendungsgebietes abdecken. Deshalb werden im Folgenden stellvertretend Glasflächen erwähnt.

Der notwendigen Reinigung der Glasflächen stehen die meist schlechte Zugänglichkeit sowie die Reinigungskosten gegenüber. Diese steigen mit der zu reinigenden Fläche und mit dem Aufwand das Fenster zu erreichen.
Als Beispiel für die schlechte Zugänglichkeit dienen zum Beispiel Schrägdach-Wintergartenfenster, schwer erreichbare Fensterflächen an hohen Fassaden oder im Dach integrierte Glasflächen.

Vorwiegend reinigen menschliche Fachkräfte mit spezialisierten Reinigungswerkzeugen die Glasflächen manuell. Dazu wird üblicherweise im ersten Arbeitsschritt mit einem mit einer Reinigungsflüssigkeit befeuchteten Einwascher das Fenster befeuchtet, um den Schmutz mechanisch zu lockern sowie in der Reinigungsflüssigkeit zu binden. Im zweiten Arbeitsschritt wird die Reinigungsflüssigkeit mit dem gelösten Schmutz mit einem Abstreifer von der Scheibe gezogen.
Die technischen Hilfsmittel, um Zugang für die manuelle Reinigung der weitgehend glatten Flächen zu bekommen, sind Hebebühnen, Teleskopstangen, Kräne, fest installierte Fassadenfahrstühle und Industrie-Kletterausrüstungen.
Außerdem werden technische Geräte zum Reinigen der Fensterflächen eingesetzt, wie zum Beispiel Spezialfahrzeuge mit Reinigungseinheit am Ausleger oder temporär an die Fassade installierte Seilzug-Fahrstühle mit einer Reinigungseinheit.
Das Patent WO 2013/076711 A2 beschreibt ein Fluggerät, das über eine mechanisch aktive Reinigungseinheit verfügt und über eine Sicherungsleine von oben fixiert ist, sowie über Versorgungskabel angeschlossen ist um weitgehend glatte Flächen manuell per Fernsteuerung zu reinigen.
In DE 10 2013 101194 A1 wird ein Verfahren und Vorrichtung zur Reinigung, Erneuerung und Gestaltung von Oberflächen mittels eines Fluggeräts beschrieben, welches in Behandlungsnähe zur Oberfläche in Position gebracht wird. Damit wird durch das Aufbringen eines Behandlungsmittels die Oberfläche gereinigt.
Des Weiteren gibt es Fensterreinigungsroboter, die manuell an die Scheibe geführt werden und anschließend autonom die Fensterfläche zum Reinigen abfahren. Diese Roboter haften mittels einer Saugvorrichtung auch an senkrechten Scheiben.

Jede dieser Lösungen hat wenigstens einen Nachteil: eingeschränkte Zugänglichkeit der weitgehend glatten Flächen, hoher Inbetriebnahme-Aufwand aufgrund individueller Objektbeschaffenheit, eingeschränktes Reinigungsergebnis oder hoher Aufwand zur Minimierung des Gefährdungspotentials.
Das im Patent WO 2013/076711 A2 beschriebene Fluggerät ist mit Versorgungskabeln ausgestattet, die dem schweren und mechanisch aufwändigen Reinigungswerkzeug geschuldet sind, sodass entsprechende Einschränkungen bezüglich Erreichbarkeit der weitgehend glatten Flächen zu erwarten sind. Des Weiteren wird nicht das Problem gelöst, wie die Reinigungseinheit einen Anpressdruck auf die zu reinigende Oberfläche ausübt. Ebenso ist das Reinigungsergebnis aufgrund der Bürstenvorrichtung und der parallel dazu installierten Abstreiflippe nur unzureichend, weil diese Vorrichtung nicht in der Lage ist, die Fensterfläche bis an den Rand zu reinigen.
Das im Patent DE 10 2013 101194 A1 beschriebene Fluggerät wird nur in Behandlungsnähe zur Oberfläche in Position gebracht und bringt anschließend das Behandlungsmittel durch ein Spritzgerät, Sprühgerät, Druckluftreiniger, Druckkopf oder Stempel auf. Dadurch ist keine mechanische Reinigung der Oberfläche gewährleistet und der Schmutz kann nur in der Reinigungsflüssigkeit gebunden aber nicht abtransportiert werden kann. Somit ist eine rückstandsfreie Reinigung einer Glasfläche nicht möglich.
Die autonomen Scheibenreinigungsroboter mit Saugvorrichtung müssen manuell auf jedes einzelne Fenster geführt werden und bieten daher keine Lösung für schwer erreichbare Fensterflächen. Außerdem beeinträchtigt der Kontakt der Saugvorrichtung mit der Fensterfläche das Reinigungsergebnis.

Diesen Nachteilen wurde bisher begegnet, durch Inkaufnahme von hohen Reinigungskosten, Inkaufnahme eines Sicherheitsrisikos für Mensch und Gebäude während der Reinigung sowie der Verzicht auf ein qualitativ hochwertiges Reinigungsergebnis der weitgehend glatten Flächen.

### Problem:

Der im Verfahrensanspruch 1 angegebenen Erfindung liegt das Problem zugrunde, weitgehend glatte und schwer erreichbare Flächen in Ihren vielfältigen Ausführungsformen mit einem universellen Reinigungsgerät teil- oder vollautonom zu reinigen und dabei ein qualitativ hochwertiges Reinigungsergebnis zu erzielen.

### Lösung:

Dieses Problem wird durch die im Patentanspruch 1 aufgeführten Merkmale gelöst.

### Erreichte Vorteile:

Die mit der Erfindung erzielten Vorteile bestehen insbesondere darin, dass schwer erreichbare Flächen nahezu uneingeschränkt erreichbar sind und wahlweise teilautonom oder vollautonom gereinigt werden können. Durch das Erfassen der weitgehend glatten Fläche mit einer Vorrichtung zur Lokalisierung, wird das Fenster als Referenzobjekt genutzt um relativ dazu das Drehflügelfluggerät zu navigieren. Dadurch wird eine präzise Navigation möglich um das Drehflügelfluggerät sicher auf der Fensterfläche zu landen, anschließend mit dem Reinigungswerkzeug fortzubewegen und wieder sicher von der Fensterfläche abzudocken.

Der Kontakt des Drehflügelfluggeräts zur weitgehend glatten Fläche wird durch das Reinigungswerkzeug hergestellt, sodass keine weiteren Abstütz- oder Haftstellen existieren und ein zufriedenstellendes Reinigungsergebnis zu erwarten ist. Der Winkel der Fensterfläche muss dabei nicht senkrecht sein, sodass auch schräge Fensterflächen gereinigt werden können.
Der Anpressdruck wird mithilfe des Antriebs eines Drehflügelfluggeräts erzeugt, indem durch das elektronische Steuergerät mit dem Drehflügelfluggerät ein Schub in Richtung weitgehend glatte Fläche erzeugt wird. Die Fortbewegung auf der Fensterfläche wird ebenso mithilfe des Antriebs eines Drehflügelfluggeräts erzeugt, indem durch das elektronische Steuergerät mit dem Drehflügelfluggerät ein Schubanteil in einer Richtung parallel zur weitgehend glatten Fläche erzeugt wird. Damit werden keine weiteren Antriebseinheiten zum Reinigen des Fensters benötigt.
Am Gebäude sind keine gesonderten Vorrichtungen notwendig und eine Gefährdung von Reinigungsfachpersonal durch das Begehen von schwer erreichbaren glatten Flächen ist ausgeschlossen.

### Vorteilhafte Ausgestaltung der Erfindung:

Eine vorteilhafte Ausgestaltung der Erfindung ist im Patentanspruch 3 angegeben. Das bewährte menschliche Reinigungsprinzip mit Einwascher und Abstreifer wird bei dieser Lösung übernommen. Dazu wird im ersten Verfahrensschritt das Fenster, oder ein Abschnitt davon, mit einem Reinigungsmedium durch den Einwascher eingenässt und durch die Fortbewegung auf der Scheibe mechanisch gereinigt. Durch die Lösung des Schmutzes in der Reinigungsflüssigkeit entsteht die sogenannte Reinigungsflotte. Im zweiten Schritt wird mit dem Abstreifer die Reinigungsflotte vom Fenster entfernt. Damit ist es möglich die Fensterfläche lückenlos zu reinigen und die Reinigungsqualität des menschlichen Reinigungsprinzips zu erreichen.
Durch die wenigen mechanischen Komponenten kann das Drehflügelfluggerät mit besonders wenig Eigengewicht auskommen und eignet sich damit für einen Batteriebetrieb. Dadurch kann auf ein Versorgungskabel verzichtet werden und unterliegt damit weniger Einschränkungen bezüglich Zugänglichkeit und Wartungsaufwand. Des Weiteren ist das Gefahrenpotential im Falle eines Absturzes niedrig, aufgrund der geringen Masse.

### Weitere vorteilhafte Ausgestaltung der Erfindung:

Eine weitere vorteilhafte Ausgestaltung der Erfindung ist im Patentanspruch 6 oder 10 angegeben.
Mit einer beweglich montierten Reinigungsvorrichtung, wird über die gesamte Länge der Reinigungsvorrichtung ein gleichmäßiger Anpressdruck realisiert. Dazu ist mittig an der Reinigungsvorrichtung und koaxial zur Bewegungsrichtung auf der Fensterfläche ein schwenkbares Gelenk angebracht. Mit dem elektronischen Steuergerät wird das Drehflügelfluggerät so angesteuert, dass ein definierter Schwenkwinkel eingeregelt wird, vorteilhaft mithilfe der Gierbewegung des Drehflügelfluggeräts.
Das ist insbesondere für Abstreifer vorteilhaft, um durch den homogenen Anpressdruck über die gesamte Länge der Gummilippe eine gleichmäßiges und streifenfreies Abstreifen der Reinigungsflotte zu erzielen.

### Beschreibung eines oder mehrerer Ausführungsbeispiele:

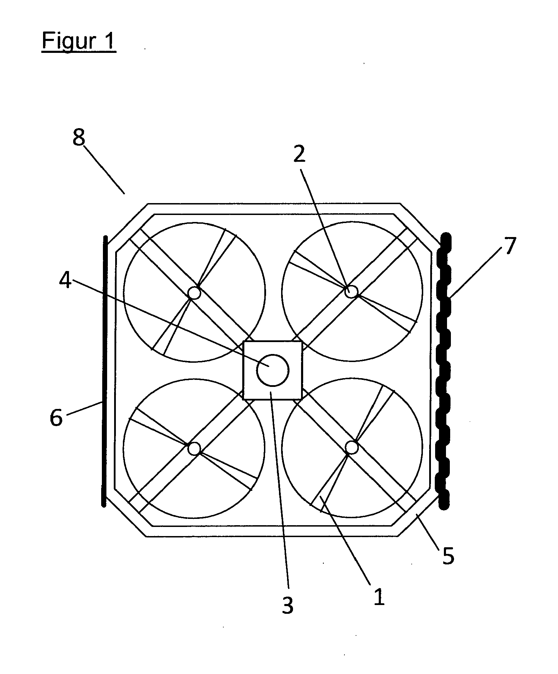

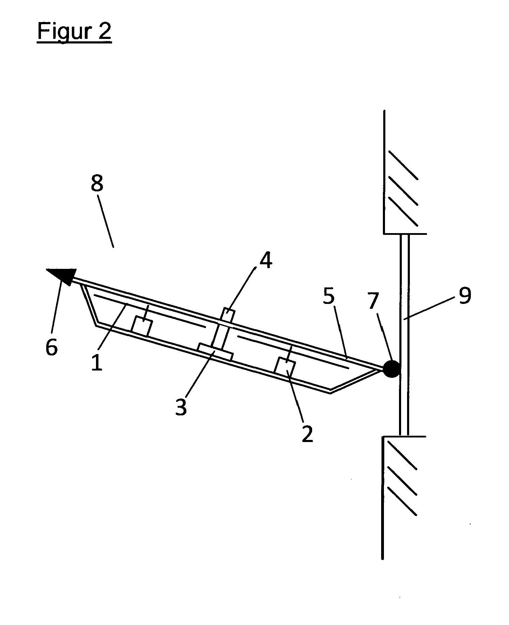

**Ein Ausführungsbeispiel der Erfindung** ist in der Zeichnung Fig. 1 und Fig. 2 dargestellt und wird im Folgenden näher beschrieben.

Es zeigen:
Fig. 1 die Draufsicht auf das Drehflügelfluggerät
Fig. 2 die Seitenansicht des Drehflügelfluggeräts

Es folgt die Erläuterung der Erfindung anhand der Zeichnungen nach Aufbau und auch nach Wirkungsweise der dargestellten Erfindung.
Dabei ist das Drehflügelfluggerät (8) als Quadrokopter in X-Konfiguration mit vier Auslegern ausgeführt. An jedem Ausleger ist ein Motor (2) mit zugehörigem Rotor (1) befestigt.
Über eine Verlängerung der Ausleger ist ein umlaufender Rahmen (5) montiert, der als Aufnahme für einen Einwascher (7) an der Vorderseite des Drehflügelfluggeräts dient sowie für Abstreifer (6) an der Rückseite. Der Rahmen (5) mit dem Einwascher (7) und dem Abstreifer (6) liegt, wie in Fig. 2 dargestellt, in der Rotorblattebene um Kollisionen von Gebäude und Rotoren (1) zu vermeiden.
Auf dem Drehflügelfluggerät ist ein elektronisches Steuergerät (3) verbaut, dass über ein inertiales Navigationssystem und einen Mikroprozessor zur Datenverarbeitung verfügt, sowie eine Vorrichtung zum Erfassen des Fensters (4) und damit die Möglichkeit zur eigenen Lokalisierung. Dadurch können die Rotoren (1) entsprechend angesteuert werden um den gewünschten Betriebszustand zu erhalten.
Damit kann das Drehflügelfluggerät (8) vor das Fenster (9) fliegen, die Fensterrahmen mit der Vorrichtung zum Erfassen von Fenstern (4) lokalisieren, mit dem in Reinigungsflüssigkeit getränkten Einwascher (7) auf dem Fenster (9) aufsetzen und die Reinigungsbewegung durch seinen Drehflügelantrieb ausführen. Durch den Drehflügelantrieb kann der Anpressdruck des Reinigungswerkzeuges sowie die Bewegungsrichtung eingestellt werden, indem die Sensordaten des intertialen Navigationssystems (3) ausgewertet werden. Dazu wird ausgehend von einer nach dem Stand der Technik üblichen Flugsteuerung ein Nick- und Rollwinkel eingestellt, sodass entsprechende Kräfte in X- und Y-Richtung parallel zur Fensterfläche sowie ein Anpressdruck resultieren, dargestellt in Fig. 2. Der Winkel zwischen Fensterfläche (9) und Erdoberfläche muss dabei nicht rechtwinklig sein.
Nach der vollständigen Reinigung der Fensterfläche (9) mit dem Einwascher dockt das Drehflügelfluggerät von der Fensterfläche (9) ab und geht in einen normalen Flugbetrieb über.
Um das Fenster (9) von der Reinigungsflotte zu befreien, wird der Abstreifer (6) eingesetzt. Dazu dreht sich das Drehflügelfluggerät (8), um sich mit dem rückseitig montierten Abstreifer (6) dem Fenster zuzuwenden. Nun dockt das Drehflügelfluggerät am oberen Fensterrahmen mit dem Abstreifer (6) an das Fenster und zieht vom oberen bis zum unteren Fensterrahmen die Reinigungsflotte ab. Nach dem erneuten Abdocken wird das Fenster bahnweise von der Reinigungsflotte befreit.
Das Drehflügelfluggerät kann damit die komplette Fensterfläche (9) mit dem Einwascher (7) abfahren und dem Abstreifer abziehen und ermöglicht es damit ein zufriedenstellendes Reinigungsergebnis zu erzielen.
Im nächsten Schritt kann ein weiteres Fenster gereinigt werden oder es wird der Einwascher (7) gereinigt.

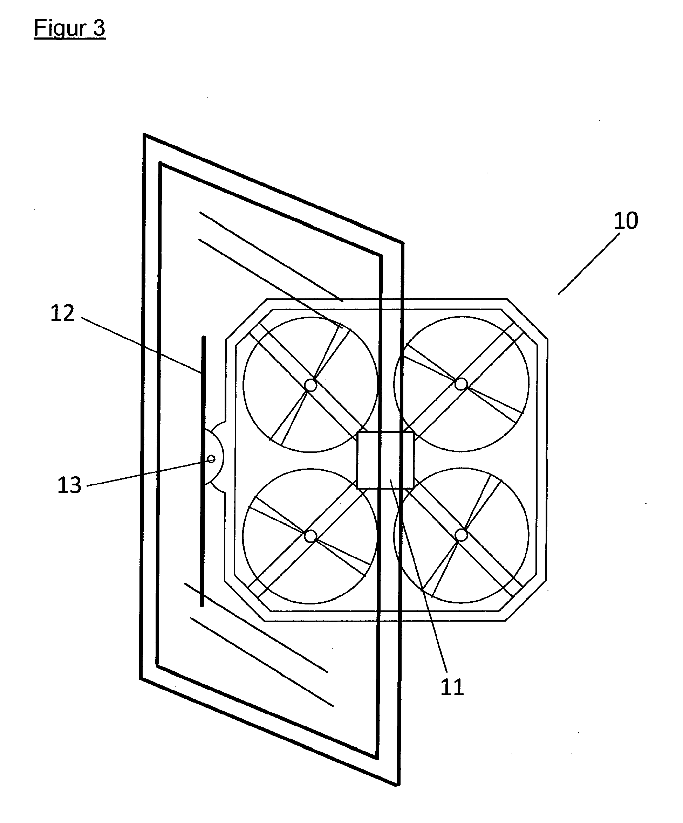

**Ein weiteres Ausführungsbeispiel der Erfindung** ist in der Zeichnung Fig. 3 dargestellt und wird im Folgenden näher beschrieben.

Es zeigt Fig. 3 die Draufsicht auf das Drehflügelfluggerät mit einem schwenkbaren Gelenk

Es folgt die Erläuterung der Erfindung anhand der Zeichnung nach Aufbau und auch nach Wirkungsweise der dargestellten Erfindung.
Die Reinigungsvorrichtung ist dabei über ein in der Hochachse schwenkbares Gelenk mit dem Drehflügelfluggerät (10) verbunden. Dazu ist mittig an einem Abstreifer (12) ein schwenkbar gelagertes Gelenk (13) angebracht welches die Gummilippe des Abstreifers über seine Länge gleichmäßig an das Fensterglas drückt. Mit dem elektronischen Steuergerät (11) wird das Drehflügelfluggerät so angesteuert, dass ein definierter Schwenkwinkel im Gelenk eingeregelt wird, vorteilhaft mithilfe des steuerbaren Giermoments des Drehflügelfluggeräts. Durch den geregelten Schwenkwinkel wird verhindert, dass das Drehflügelfluggerät sich an das Fenster dreht und damit kollidiert.

### Bezugszeichenliste

- 1: Rotor
- 2: Motor
- 3: Steuergerät
- 4: Vorrichtung zur Lokalisierung
- 5: Rahmen
- 6: Abstreifer
- 7: Einwascher
- 8: Drehflügelfluggerät
- 9: Fenster
- 10: Drehflügelfluggerät
- 11: Steuergerät
- 12: Reinigungsvorrichtung
- 13: schwenkbar gelagertes Gelenk

## Patentansprüche

1. Verfahren zum Steuern eines unbemannten Drehflügelfluggeräts (8) zur Reinigung weitgehend glatter Flächen, wobei das Drehflügelfluggerät mit mindestens einem elektronischen Steuergerät (3), einer Vorrichtung zur Lokalisierung von weitgehend glatten Flächen (4), mindestens einem Energiespeicher sowie mindestens einer Reinigungsvorrichtung ausgestattet ist, und mindestens folgende Verfahrensschritte ausgeführt werden:
- Fortbewegung des Drehflügelfluggeräts zu Ort in Nähe der weitgehend glatten Fläche; und
- Erfassen der weitgehend glatten Fläche durch die Vorrichtung zur Lokalisierung; und
- Anflug und Andocken mit der Reinigungsvorrichtung, auf die erfasste weitgehend glatte Fläche; und
- Reinigen der weitgehend glatten Fläche mit der Reinigungsvorrichtung, indem mit dem elektronischen Steuergerät (3) das Drehflügelfluggerät so angesteuert wird, dass ein Anpressdruck und eine Fortbewegung in einer parallelen Richtung auf der erfassten weitgehend glatten Fläche ausgeführt werden.

2. Verfahren nach Anspruch 1, **dadurch gekennzeichnet,**
**dass** die Reinigungsvorrichtung des Drehflügelfluggeräts (8) mindestens einen Einwascher (7) und/oder mindestens einen Abstreifer (6) aufweist.

3. Verfahren nach einem der Ansprüche 1 und 2, **dadurch gekennzeichnet,**
**dass** die Reinigung der weitgehend glatten Fläche oder eines Abschnitts davon, zuerst mit einem Einwascher (7) durch das Aufbringen eines Reinigungsmediums und anschließend durch das Entfernen der Reinigungsflotte mit einem Abstreifer (6) ausgeführt wird.

4. Verfahren nach einem der Ansprüche 1 bis 3, **dadurch gekennzeichnet,**
**dass** das Drehflügelfluggerät (8) nach dem Einwaschen abdockt und zum Abstreifen erneut andockt.

5. Verfahren nach einem der Ansprüche 1 bis 3, **dadurch gekennzeichnet,**
**dass** die Reinigungsvorrichtung mit einem um das Drehflügelfluggerät (8) umlaufenden Rahmen versehen ist, an dem mindestens ein Einwascher (7) und/oder mindestens ein Abstreifer (6) befestigt ist und dass der umlaufende Rahmen (5) in Höhe der Rotorblattebene ausgeführt ist.

6. Verfahren nach einem der Ansprüche 1 bis 2, **dadurch gekennzeichnet,**
**dass** die Reinigungsvorrichtung (12) über mindestens eine bewegliche Verbindung (13) mit dem Drehflügelfluggerät ausgeführt ist.

7. Verfahren nach Anspruch 1, **dadurch gekennzeichnet,**
**dass** das Drehflügelfluggerät (8) vorzugsweise als Quadrokopter, Hexakopter, Oktokopter oder Hubschrauber ausgeführt ist.

8. Verfahren nach Anspruch 1, **dadurch gekennzeichnet,**
**dass** sich die Vorrichtung zur Lokalisierung (4) von weitgehend glatten Flächen auf die weitgehend glatte Fläche ausrichtet.

9. Verfahren nach Anspruch 1, **dadurch gekennzeichnet,**
**dass** die Vorrichtung zur Lokalisierung (4) von weitgehend glatten Flächen mindestens einen Sensor aufweist, der die Umrandung sowie den Abstand zur weitgehend glatten Fläche erfasst.

10. Vorrichtung zur Reinigung von weitgehend glatten Flächen mittels eines unbemannten
Drehflügelfluggeräts (10), wobei das Drehflügelfluggerät mit mindestens einem elektronischen Steuergerät (11), mindestens einem Energiespeicher, mindestens einer Reinigungsvorrichtung (12) sowie mindestens einer beweglichen Verbindung (13) zwischen dem Drehflügelfluggerät und der Reinigungsvorrichtung ausgeführt ist.

11. Vorrichtung nach Anspruch 10, **dadurch gekennzeichnet,**
**dass** die Reinigungsvorrichtung des Drehflügelfluggeräts (8) als Einwascher (7) und/oder Abstreifer (6) ausgeführt ist.

12. Vorrichtung nach einem der Ansprüche 10 bis 11, **dadurch gekennzeichnet,**
**dass** die Reinigungsvorrichtung mit einem um das Drehflügelfluggerät (8) umlaufenden Rahmen versehen ist, an dem mindestens ein Einwascher (7) und/oder mindestens ein Abstreifer (6) befestigt ist und dass der umlaufende Rahmen (5) in Höhe der Rotorblattebene ausgeführt ist.

13. Vorrichtung nach Anspruch 10, **dadurch gekennzeichnet,**
**dass** das Drehflügelfluggerät (8) vorzugsweise als Quadrokopter, Hexakopter, Oktokopter oder Hubschrauber ausgeführt ist.
